# EUROPÄISCHE PATENTANMELDUNG

(11) **EP 2 243 351 A1**
(43) Veröffentlichungstag der Anmeldung: **27.10.2010**
(21) Anmeldenummer: 09158330.2
(22) Anmeldetag: 21.04.2009
(51) Int. Cl.: A01G 7/04

(54) **Vorrichtung und Verfahren zum Verbessern von Pflanzenwachstum**

(71) Anmelder: Schwille-Elektronik Produktions- und Vertriebs GmbH, 85551 Kirchheim (DE)
(72) Erfinder: Schwille, Werner, 85464 Eicherloh (DE)
(74) Vertreter: Alber, Norbert

(57) **Zusammenfassung**

Eine Verbesserung des Pflanzenwachstums durch den Einfluss eines hochfrequenten elektrischen Wechselfeldes kann optimiert werden, indem das benötigte hochfrequente elektrische Feld mittels eines Tesla-Luft-Transformators erzeugt wird.

## Beschreibung

### I. Anwendungsgebiet

Die Erfindung betrifft die Verbesserung des Pflanzenwachstums.

### II. Technischer Hintergrund

Aus dem Gebrauchsmuster 20 2005 021 377 sind in einer Ebene liegende Flachspulen bekannt, sowie ein daraus erstellter Tesla-Generator zur Erzeugung eines hochfrequenten elektrischen Feldes.

Laut der vorhandenen Literatur wurden von Nikolaus Tesla derartige Tesla-Generatoren zum drahtlosen Übertragen von elektrischer Energie zu einem entfernt angeordneten analogen Empfänger benutzt.

Des Weiteren ist es aus der DE 10 2005 055 889 bekannt, dem Aufsteigen von Feuchtigkeit in Mauerwerk, welches aufgrund der Kapillarwirkung und angeblich eines so genannten Zeta-Potentials bewirkt wird, durch Beaufschlagen mit einem elektrischen Hochfrequenzfeld entgegenzuwirken.

Seit Prof. Reuss 1803 feststellte, dass Wassermoleküle sich in einem elektrischen Feld zum negativ geladenen Pol hin bewegen, wurde - spätestens seit 1935 - versucht, diese Erkenntnis gezielt zur Beeinflussung von Fließvorgängen - sei es von Stoffen in Flüssigkeiten oder auch von Flüssigkeiten in porösen Körpern - zu nutzen.

Die Funktion besteht vermutlich darin, dass ein elektrisches Potential, das so genannte Zeta-Potential, zwischen den sich in den Kapillaren bewegenden Wassermolekülen und der Kapillargrenzschicht entsteht, wobei die Wassermoleküle meistens an die Hydrathülle von Salzionen gebunden sind.

Durch ein schwaches, gepulstes elektrisches Feld soll diese Ladungsbindung gelöst werden und der Aufbau des Zeta-Potentials unterbrochen werden, so dass die Wassermoleküle entsprechend der Schwerkraft zum Erdreich zurücksinken oder zumindest nicht weiter aufsteigen, sondern verdunsten.

Für die Wirkung auf Pflanzen, die Wasser aus dem Boden hochsaugen müssen und dabei ebenfalls den Kapillareffekt mit nutzen, würde dies theoretisch eine Erschwerung des Hochsaugens von Wasser aus dem Erdboden bedeuten.

### III. Darstellung der Erfindung

### a) Technische Aufgabe

Es ist daher die Aufgabe gemäß der Erfindung, das Wachstum von Pflanzen positiv zu beeinflussen.

### b) Lösung der Aufgabe

Diese Aufgabe wird durch die Ansprüche 1 und 10 gelöst. Vorteilhafte Ausführungsformen ergeben sich aus den Unteransprüchen.

Erstaunlicherweise hat sich im Gegensatz zu den theoretischen Erwartungen nämlich herausgestellt, dass Pflanzen unter dem Einfluss eines hochfrequenten elektrischen Wechselfeldes in ihrem Wachstum nicht negativ, sondern äußerst positiv beeinflusst werden, vor allem in geschlossenen Räumen, vielleicht deshalb, weil dort das natürliche elektrische Feld durch Metallanteile in der Gebäudehülle ganz oder teilweise abgeschirmt wird. Allerdings darf die Vorrichtung nicht geerdet sein bzw. nicht auf das Potential gelegt sein, auf dem sich die Pflanze befindet.

Vor allem hat sich die Wirkung dann als sehr positiv erwiesen, wenn ein Hochfrequenzfeld nicht nur von einer Abstrahlfläche abgestrahlt wird, sondern von zwei Abstrahlflächen, die z. B. Teil eines in Resonanz befindlichen offenen Schwingkreises mit zwei Spulen sind, deren einander entsprechende Enden elektrisch leitend miteinander verbunden sind, aber die feldabstrahlende Spule nicht geerdet ist.

Die beiden Spulen sollten dabei lose gekoppelt sein, also bei Luft dazwischen einen Abstand von 5 mm bis 25 mm haben.

Die Windungszahlen der beiden das elektrische Feld abgebenden Spulen ist dabei gleich und insbesondere handelt es sich dabei im Ganzen um identische Spulen, auch hinsichtlich ihrer Abmessungen.

Selbstverständlich ist dabei innerhalb des Transformators die das Feld abgebende Spule diejenige mit der größeren Wicklungszahl.

Wenn zusätzlich Sekundärspule und Primärspule des Transformators und insbesondere auch die weitere Spule keine normalen, zylindrischen Spulen, sondern in einer Ebene gewickelte Flachspulen in Form jeweils einer einzigen Spirale sind, sind besonders hohe Feldstärken des abgegebenen hochfrequenten elektrischen Feldes erreichbar.

Dies hängt nicht zuletzt von der am heißen Ende der Sekundärspule und insbesondere auch an der zusätzlichen Spule angeordneten Abstrahlfläche und deren Größe und Gestalt ab, wobei insbesondere ein Kugelstrahler empfohlen wird, der das elektrische Feld gleichmäßig nach allen Seiten abgibt. Die Kugel sollte dabei einen Durchmesser von 2 - 20 cm, insbesondere von 5 - 10 cm, besitzen.

Die Windungszahlen der Primärspule und der Sekundärspule verhalten sich etwa wie 1:5 bis 1:10, wobei auf der Primärseite 3-10 Windungen, insbesondere 5-10 Windungen bevorzugt werden, während auf der Sekundärseite 30-50 Windungen eine gute Wirkung ergeben.

Der an die primärseitige Spule angeschlossene Sinus-Generator arbeitet mit einer Frequenz von vorzugsweise 100 kHz - 15 MHz, insbesondere 6,780 MHz und 13,560 MHz (ISM-Frequenz), wobei sich Sinusspannungen als besonders wirksam erwiesen haben. Dabei sind Stromstärken in der Primärspule bis 2 Ampere, besser nur bis 1 Ampere in der Regel völlig ausreichend.

Damit können Feldstärken von 20 bis 200 V/m nahe am Strahler erzeugt werden.

Der Innenwiderstand der Primärspule soll vorzugsweise 20-80 Ohm, insbesondere 30-60 Ohm, betragen.

Primärspule und Sekundärspule sollten dabei den gleichen Wicklungssinn, betrachtet von derselben Stirnseite her, aufweisen.

In der praktischen Ausführung können die beiden Spulen in parallelen Ebenen zueinander angeordnet sein, indem sie auf den leitenden Flächen je einer elektrisch leitenden Seite von getrennten, im Abstand zueinander angeordneten, Platinen geätzt sind.

### c) Ausführungsbeispiele

Ausführungsformen gemäß der Erfindung sind im Folgenden beispielhaft näher beschrieben. Es zeigen:

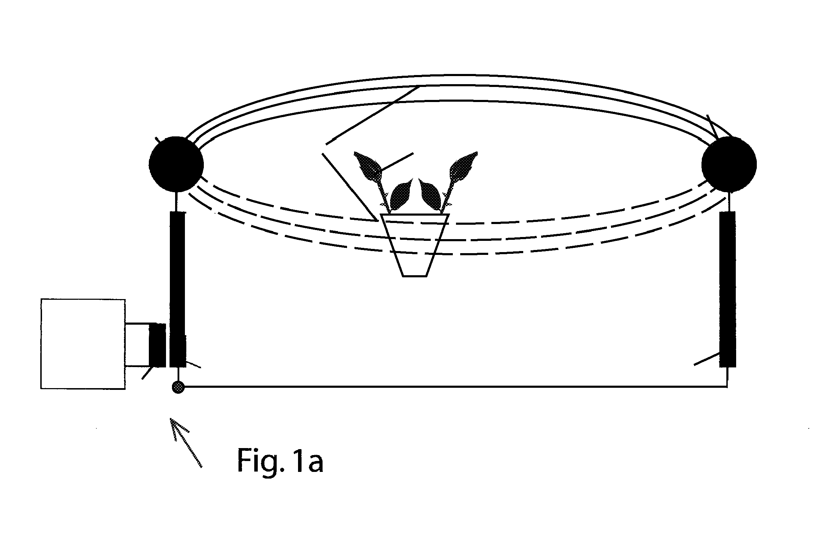

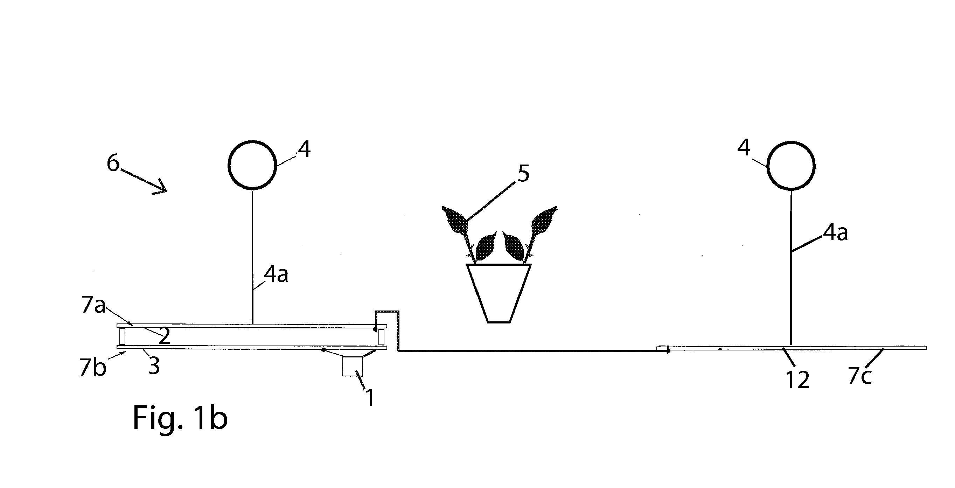

- Fig. 1 a:: eine Prinzipdarstellung des Wachstumsbeschleunigers,
- Fig. 1 b:: eine realistische Darstellung der Vorrichtung,
- Fig. 2a:: eine Prinzipdarstellung einer vereinfachten Bauform,
- Fig. 2b:: eine realistische Darstellung einer vereinfachten Bauform, und
- Fig. 3:: eine Darstellung der hierfür verwendeten Spulen.

Fig. 1a zeigt prinzipiell die gewünschte Situation:
Die Pflanze 5 - von der beispielhaft nur eine dargestellt ist - befindet sich zwischen den beiden Abstrahlflächen für das hochfrequente elektrische Feld in Form der Kugelstrahler 4.

Da die Spulen 2 und 12 gleiche Windungszahlen besitzen und insbesondere identische Spulen sind, und insbesondere auch die Abstrahlflächen, in diesem Fall die Kugelstrahler 4, identisch sind, wird dadurch ein Parallelschwingkreis erzeugt, da zwischen den Kugelstrahler 4 und dem Potential am anderen Ende dieser Spulen eine Kapazität vorliegt.

Die Kugelstrahler 4 geben ein hochfrequentes elektrisches Feld 8 deshalb ab, weil sie jeweils mit dem einen Ende einer Spule 2 bzw. 12, deren andere Enden miteinander elektrisch leitend verbunden sind, in Verbindung stehen. Die Spule 2 steht mit einer in der Nähe angeordneten Primärspule 3 als Transformator in Wechselwirkung, der mit einem Sinusgenerator 1 elektrisch im Kreis geschaltet ist, so dass der gesamte Transformator 6 mit einer Sinusspannung angesteuert wird.

Der Parallelschwingkreis wird auf Resonanz eingestellt, indem die Frequenz des Sinus-Generators 1 so gewählt wird, dass das zwischen den Abstrahlflächen, den Kugelstrahler 4, sich ausbildende elektrische Feld 8 den maximalen Wert erreicht.

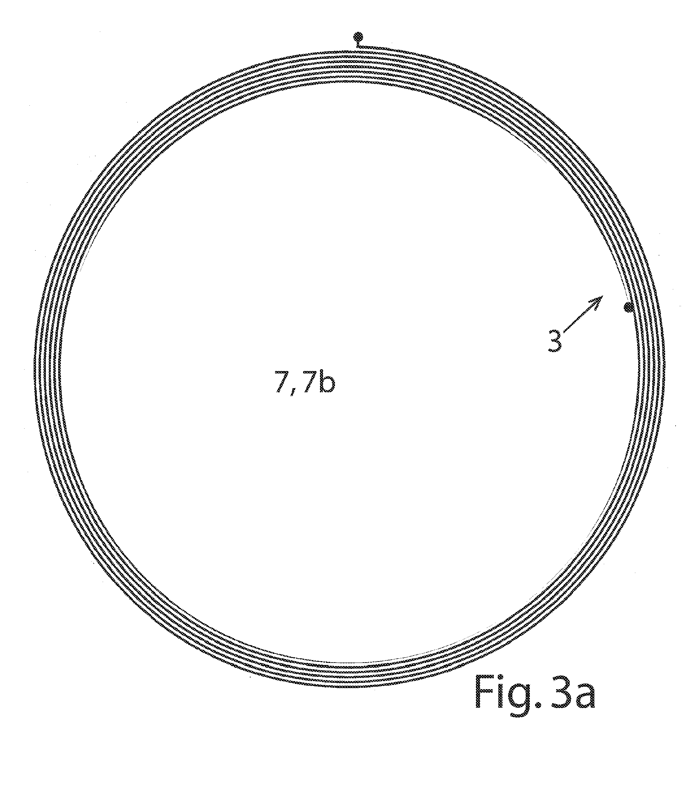

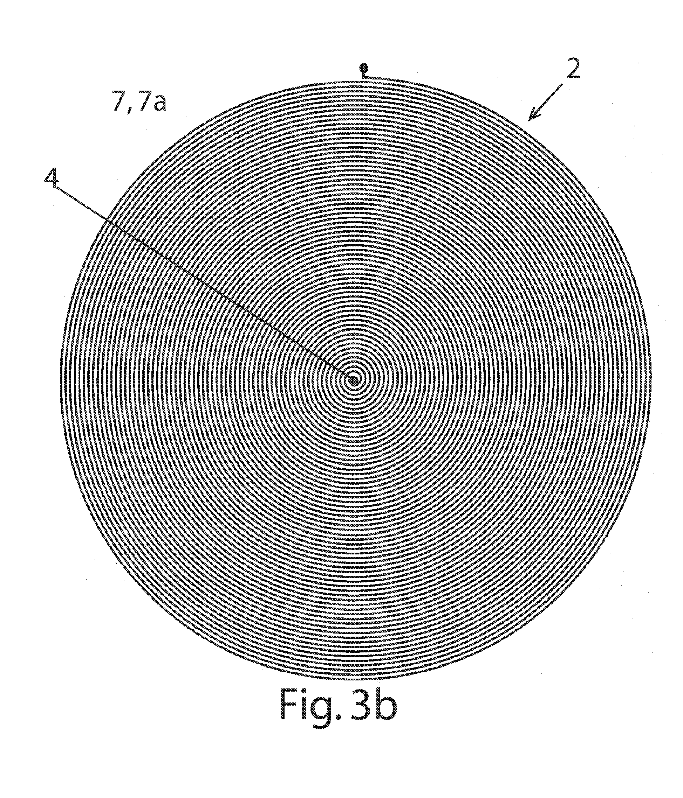

Die Wirksamkeit ist besonders hoch, da als Spulen 2, 3, 12 Flachspulen verwendet werden, also jeweils spiralförmige, in einer einzigen Ebene aus einer einzigen Wicklung, aber einer Vielzahl von Windungen bestehenden Spulen, wie in den Fig. 3a und 3b im einzelnen als Primärspule 3 mit wenigen Windungen und Sekundärspule 2 mit mehr Windungen dargestellt.

Wie ersichtlich besitzen beide Spulen 2,3 den gleichen Wicklungssinn und etwa den gleichen Außendurchmesser, bei der Primärspule 3 jedoch nur 7 Windungen, bei der Sekundärspule 2 ca. 50 Windungen, jeweils in Form nur einer Wicklung.

Fig. 1b zeigt den konkreten konstruktiven Aufbau, bei dem alle Spulen FlachSpulen sind: Die Spulen 2, 3, 12 sind jeweils auf einer Seite einer Platine 7a, b, c aufgebracht, wovon im Kondensator 6 die Spulen 2 und 3 im Abstand parallel und vorzugsweise horizontal übereinander positioniert sind. Die einander entsprechenden Enden der Spulen 2, 12, in diesem Fall die kalten, z. B. äußeren Enden, sind elektrisch leitend miteinander verbunden.

Die beiden Enden der Primärspule 3 sind an die beiden Ausgänge eines Sinus-Generators 1 angeschlossen.

Das heiße, in diesem Fall innere, Ende der Spirale der Sekundärspule 2 als auch der Spule 12 ist über einen Verbindungsstab 4a mit der elektrisch leitenden Oberfläche je eines Kugelstrahlers 4 elektrisch leitend verbunden, hält den Kugelstrahler 4 dadurch auf einen ausreichenden Abstand zu den Spulen 2, 3 und 12 und speist die Kugelstrahler 4 mit der sinusförmigen hochfrequenten Spannung.

Bei den beschriebenen Parametern und einer primärseitigen Betriebsspannung von 1 Ampere werden elektrische Feldstärken von etwa 50 V/m beim elektrischen Feld 8 gemessen, wofür es ausreichend ist, die Kugelstrahler 4 in einem Abstand von nicht mehr als 20 Metern, besser nicht mehr als 10 Metern, besser nicht mehr als 5 Metern, zu der zu beeinflussenden Pflanze 5 zu positionieren.

Für ein Gewächshaus mit einer Grundfläche von z. B. 20 mal 20 Metern ist daher nur eine derartige Vorrichtung notwendig.

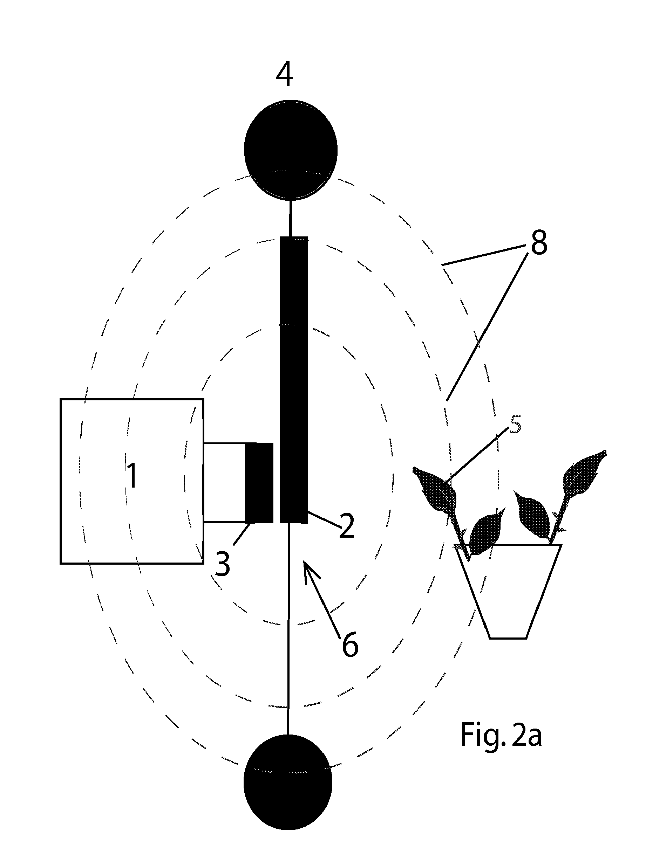

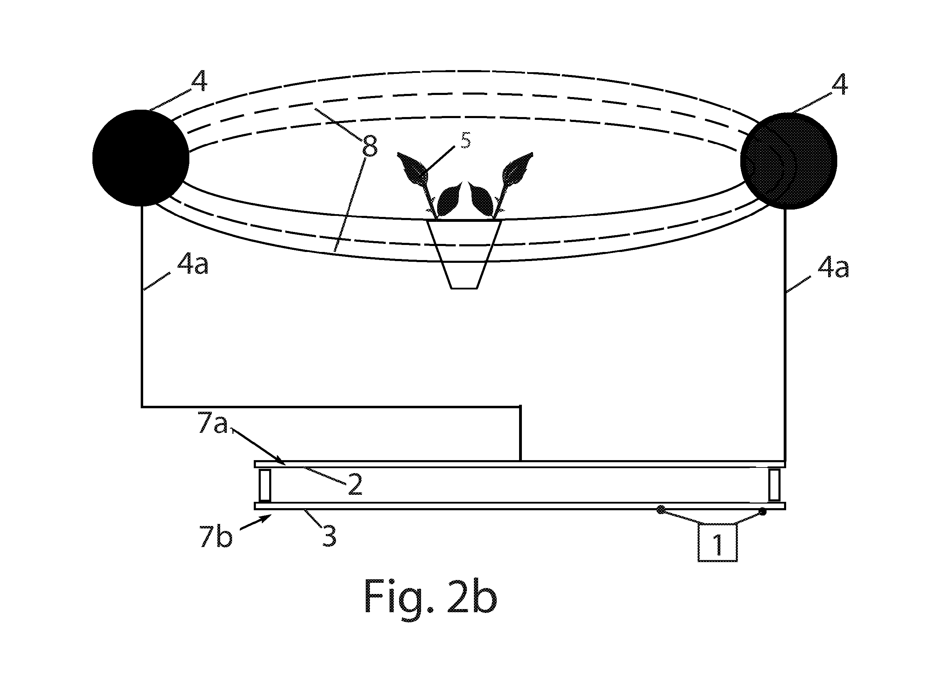

Die Figuren 2a und 2b zeigen eine demgegenüber vereinfachte Bauform, bei der zwar ebenfalls zwei Abstrahlflächen in Form von Kugelstrahlern 4 vorhanden sind, die allerdings elektrisch leitend jeweils verbunden sind mit den beiden Enden der Sekundärspule 2 des Transformators 6, und über den Transformator 6 hinaus keine weitere Spule mehr vorhanden ist.

Auch hier ist keine Erdung des Transformators vorhanden.

### BEZUGSZEICHENLISTE

- 1: Sinus-Generator
- 2: Sekundär-Spule
- 3: Primärspule
- 4: Kugelstrahler
- 4a: Verbindungs-Stange
- 5: Pflanze
- 6: Tesla-Luft-Transformator
- 7a, b: Platine
- 8: elektrisches Feld
- 9: Erdpotential
- 12: Spule

## Patentansprüche

1. Vorrichtung zum Verbessern von Pflanzenwachstum mittels Feldeinkoppelung mit
- einer ein hochfrequentes elektrisches Feld erzeugenden Spule (2),
- einem Sinus-Generator (1) zum Beaufschlagen der Spule (2), die die Sekundärspule eines Transformators (6) ist, dessen Primärspule (3) elektrisch mit dem Sinus-Generator (1) gekoppelt ist.

2. Vorrichtung nach Anspruch 1,
**dadurch gekennzeichnet dass**
die Vorrichtung eine weitere Spule (12) aufweist, deren kaltes Ende mit dem kalten Ende der Spule (2) elektrisch leitend verbunden ist.

3. Vorrichtung nach einem der vorhergehenden Ansprüche,
**dadurch gekennzeichnet dass**
die Spulen (2 und 12) identische Windungszahlen besitzen und insbesondere identisch sind.

4. Vorrichtung nach einem der vorhergehenden Ansprüche,
**dadurch gekennzeichnet dass**
- die Primärspule (3) und/oder die Sekundärspule (2) Flachspulen sind und der Transformator ein Teslatransformator, insbesondere ein Tesla-Luft-Transformator (6) ist, mit den beiden Spulen (3) und (2) in parallelen Ebenen fluchtend übereinander, und/oder
- das Ende der Sekundärspule (2), welches das höhere Potential aufweist, und/oder das Ende der weiteren Spule (12) mit je einer elektrisch leitenden Abstrahlfläche, insbesondere in Form eines Kugelstrahlers (4), elektrisch leitend verbunden ist.

5. Vorrichtung nach einer der vorhergehenden Ansprüche,
**dadurch gekennzeichnet dass**
- der Abstand der Abstrahlfläche von der Spule (2, 12) mindestens 20 cm, besser 30 cm, besser 50 cm beträgt, und/oder
- die von den Abstrahlflächen abgewandten Enden der Spulen (2) und (12) von der Primärspule (3) nicht elektrisch getrennt sind.

6. Vorrichtung nach einer der vorhergehenden Ansprüche,
**dadurch gekennzeichnet dass**
- der Sinus-Generator (1) mit einer Frequenz von 100 kHz bis 5 MHz arbeitet, insbesondere mit 6,780 MHz und 13,560 MHz, und/oder
- die Stromstärke in der Primärspule (3) maximal 1,0 Ampere, insbesondere maximal 2 Ampere beträgt.

7. Vorrichtung nach einer der vorhergehenden Ansprüche,
**dadurch gekennzeichnet dass**
- die Primärspule (3) 3-10 Windungen, insbesondere 5-10 Windungen umfasst und die Sekundärspule (2) 30-50 Windungen aufweist, und/oder
- Primärspule (3) und Sekundärspule (2) auf in die gleiche Richtung weisenden Seiten zweier nicht leitender, parallel zueinander beabstandeter, plattenförmiger Tragkörper, insbesondere Platinen (7a, b), aufgebracht sind.

8. Vorrichtung nach einer der vorhergehenden Ansprüche,
**dadurch gekennzeichnet dass**
- Primärspule (3) und Sekundärspule (2) des Tesla-Luftgenerators bei Luft als Dielektrikum in einem Abstand von 5 bis 30 mm, insbesondere von 10 bis 20 mm angeordnet sind, und/oder
- der Innenwiderstand der Primärspule (3) 20-80 Ohm, insbesondere 40-60 Ohm, beträgt.

9. Vorrichtung nach einer der vorhergehenden Ansprüche,
**dadurch gekennzeichnet dass**
- der Wicklungssinn von Primärspule (3) und Sekundärspule (2) - betrachtet in Richtung der Rotationsachse der Spulen - gegenläufig ist, und/oder
- die Spule (12) Bestandteil eines Tesla-Luftgenerators analog zu dem aus Primärspule (3) und Sekundärspule (2) sowie dem Sinus-Generator und der Abstrahlfläche aufgebauten Tesla-Luftgenerators ist, bei dem jedoch die Gegenspule über offene, elektrisch nicht leitend miteinander verbundene Enden verfügt.

10. Verfahren zum Verbessern des Pflanzenwachstums,
**dadurch gekennzeichnet dass**
die Pflanzen einem elektrischen Hochfrequenz-Wechselfeld von 100 kHz bis 15 MHz, insbesondere von 6,780 MHz oder 13, 560 MHz, ausgesetzt werden.

11. Verfahren nach Anspruch 10,
**dadurch gekennzeichnet dass**
- die Stärke des elektrischen Feldes bis zu 200 V/m an der Abstrahlfläche beträgt, und/oder
- zur Erzeugung des Hochfrequenz-Wechselfeldes bei einem Trafo (6) die Primärspule (3) sinusbeaufschlagt wird und sekundärseitig eine elektrisch leitende Abstrahlfläche, insbesondere eine Kugeloberfläche, mit demjenigen Ende der Sekundärspule (2) verbunden wird, die das höhere Potential besitzt.

12. Verfahren nach einem der vorhergehenden Verfahrensansprüche, **dadurch gekennzeichnet, dass**
- das Ende der Sekundärspule (2) mit dem niedrigeren Potential mit einem analogen Ende einer weiteren Spule (12) verbunden wird, deren anderes Ende ebenfalls mit einer elektrisch leitenden Abstrahlfläche, insbesondere einer Kugeloberfläche, verbunden ist und
- die Pflanzen in wirksamer Entfernung zu den Abstrahlflächen, insbesondere zwischen den Abstrahlflächen, angeordnet werden, und/oder
- als Trafo (6) ein Tesla-Lufttrafo gewählt wird.

13. Verfahren nach einem der vorhergehenden Verfahrensansprüche, **dadurch gekennzeichnet dass**
an die Primärspule (3) eine Stromstärke von maximal 2,0 A, insbesondere maximal 1,0 A angelegt wird.

14. Verfahren nach einem der vorhergehenden Verfahrensansprüche, **dadurch gekennzeichnet dass**
das Wechselfeld mit einer solchen Frequenz an der Primärspule (3) betrieben wird, bei der sich eine maximale elektrische Feldstärke einstellt.

15. Verfahren nach einem der vorhergehenden Verfahrensansprüche, **dadurch gekennzeichnet dass**
der aus den Spulen (2 und 12) bestehende Parallel-Schwingkreis in seiner Resonanzfrequenz betrieben wird.

16. Verfahren nach einem der vorhergehenden Verfahrensansprüche, **dadurch gekennzeichnet dass**
die Primärspule (3) und die Sekundärspule (2) in loser elektrischer Kopplung betrieben werden.
